# EUROPEAN PATENT APPLICATION

(11) **EP 1 832 615 A2**
(43) Date of publication of application: **12.09.2007**
(21) Application number: 07004903.6
(22) Date of filing: 09.03.2007
(51) Int. Cl.: C08G 59/40, C09J 163/00

(54) **Adhesive composition**

(30) Priority: 10.03.2006 US 373437
(71) Applicant: National Starch and Chemical Investment Holding Corporation, New Castle, Delaware 19720 (US)
(72) Inventor: Collins, Andrew, Bedford New Hampshire 03110 (US)
(74) Representative: Held, Stephan

(57) **Abstract**

An adhesive utilized in various electronic applications. One such adhesive is a B-stageable adhesive that offers excellent adhesion to electronic components, such as lids and substrates comprising various materials, including liquid crystal polymer. The adhesive provides latency and the ability to provide a thorough seal between lids and substrates, including those comprising LCP. The adhesive comprises a solvent, one or more solid epoxies, one or more latent hardeners and one or more thixotropic agents.

## Description

### FIELD OF THE INVENTION

This invention relates to adhesives utilized in electronic packages.

### BACKGROUND OF THE INVENTION

Electronic packages often utilize adhesives in various applications. One such common application is an adhesive utilized to affix a lid to a substrate. The lid is affixed to the substrate with a lid seal adhesive in a manner that provides a near hermetic seal in order to protect the electronic circuitry that resides in the cavity between the lid and the substrate. The process of bonding the lid to the substrate commonly involves the placement of adhesive on the portion of the lid to be affixed to the substrate followed by the placement of the lid in the desired position on the substrate. The package is then held together by mechanical force and heated to cure the adhesive.

Types of adhesives that are currently used for bonding lids and substrates include paste, or liquid, adhesives and B-stageable adhesives. After dispense onto the lid, paste adhesives possess sufficient thixotropy such that the adhesive does not flow or slump unless an external stress, such as mechanical clamping, is applied on the adhesive. Paste adhesives must be applied to the lid immediately before bonding occurs. Upon exposure to heat, light, or radiation, a wet paste adhesive will transform from a liquid to a solid upon curing. B-stageable adhesives are formed via two different techniques. One process for forming B-stageable adhesives is to form a solution with solvent, solid resins, and any other desired ingredients. After application of the wet paste to the lid, the solvent is then removed, usually via heating, to form a solid tack-free B-staged adhesive with little of no increase in molecular weight. A second process for forming B-stageable adhesives is via a chemical reaction that produces an increase in molecular weight. The molecular weight increase raises the glass transition temperature of the adhesive and the mobility of the adhesive matrix will be thus limited at room temperature. The result is a solid or semi-solid, tack-free adhesive at room temperature. Regardless of the manner of forming the adhesive, B-staged adhesives are applied to electronic packages, such as lids and substrates as wet adhesives and converted to an intermediate, unreacted, tack-free solid state in the form of a film, sheet, etc. Upon the application of additional heat, the B-staged adhesive is transformed to a final cured, solid state. Generally, B-stageable adhesives require reasonable latency at room temperature. Further, such adhesives must maintain reactivity such that they can easily be processed, shipped and stored. Advantageously, the reactivity is fast at elevated temperature to shorten the required manufacturing time.

B-stageable adhesives provide numerous advantages to manufacturers. B-stageable adhesives may be applied at one location while bonding/assembly may occur at a second, different location. The ability to perform processes in different locations is especially desirable for high volume assembly operations, such as OEMs that outsource various pieces of their operations. In this scenario, an OEM may avoid the handling of liquid adhesives by having a subcontractor pre-apply the B-stageable adhesive onto a lid and then ship that lid to the OEM in a ready to bond state.

Commercially available adhesives that provide longer shelf life require long cure times, such as an hour or more, at higher temperatures, while adhesives that provide shorter cure times at lower temperatures, such as 170°C - 180°C, have relatively short shelf lives, usually substantially less than two months. For example, commercially available adhesives that provide greater than two months of shelf life at 25°C generally take an hour or more to cure. Thus, it would be advantageous to provide an adhesive that provides a long shelf life at 25°C with a fast cure time at low temperatures.

Lids used for electronic packaging purposes have traditionally been ceramic, while the substrates have traditionally been metal. Currently available lid seal adhesives provide acceptable adhesion to such materials. However, lids and substrates, especially for wireless and power applications, are increasingly being formed from liquid crystal polymers ("LCP"). LCP packages provide a cost reduction to the manufacturer without compromising the electrical performance of the package. Due to the lower surface energy on LCPs, LCPs are more difficult to bond than metal or ceramic and currently available lid seal adhesives do not provide an adequate seal when used with LCPs. Consequently, it would be advantageous to provide a lid seal adhesive that provided good bonding to LCPs.

### BRIEF DESCRIPTION OF THE DRAWINGS

Figure 1 is a perspective view of a package lid with adhesive.
Figure 2 is a perspective view of a package lid affixed to a substrate.

### SUMMARY OF THE INVENTION

The present invention is directed to an adhesive utilized in electronic applications. One such adhesive is a B-stageable adhesive that offers excellent adhesion to electronic components, such as lids and substrates comprising various materials, including LCP. The adhesive provides latency and the ability to provide a thorough seal between lids and substrates comprising LCP. The adhesive comprises a solvent, one or more solid epoxies, one or more latent hardeners and one or more thixotropic agents.

### DETAILED DESCRIPTION OF THE PRESENT INVENTION

The present invention provides a B-stageable adhesive comprising a solvent, one or more solid epoxies, one or more latent hardeners and one or more thixotropic agents. The adhesive is useful in various electronic assembly applications, including lid seal applications. The adhesive of the present invention provides a shelf life of greater than two months at 25°C and fast cure at low temperatures. Shelf-life of an adhesive is defined as the maximum time and adhesive can be stored under specified conditions and still meet the performance requirements specified. The adhesive may be cured in less than ten minutes at temperatures of about 170°C and less than five minutes at temperatures of about 180°C. The combination of long shelf life and fast cure at low temperatures is not provided by any commercially available adhesives. During the B-stage process, the wet adhesive (A-stage) is applied to the desired surface and then B-staged in a manner that results in a tack-free coating on the surface. Following the B-stage process, the unit is heated and the adhesive is cured to form a bond between the components, such as a lid and a substrate.

The solid epoxy of the composition may comprise one or more flexibilized epoxies, such as epoxy functional rubber, including but not limited to epoxy functional butadiene, epoxy functional silicone, epoxy functional acrylic rubber, epoxy functional nitrile rubber, epoxy-CTBN adducts, epoxy-urethane adducts and mixtures thereof. These materials are created by reacting an excess of epoxy with a functionalized rubber to create an adduct. Some commercially available flexibilized epoxies include EPOTUF, commercially available from Reichold, EPON, commercially available from Shell, DER, commercially available from Dow and ARALDITE, commercially available from Huntsman.

A liquid epoxy component may be included along with the solid epoxy component. Examples of liquid epoxy resins suitable for use in the present adhesive composition are those that may be flexibilized and include monofunctional and multifunctional glycidyl ethers of Bisphenol-A and Bisphenol-F, aliphatic and aromatic epoxies, saturated and unsaturated epoxies, or cycloaliphatic epoxy resins or a combination thereof.

Examples of non-glycidyl ether epoxides include 3,4-epoxycyclohexylmethyl-3,4-epoxycyclohexane carboxylate, which contains two epoxide groups that are part of the ring structures and an ester linkage, vinylcyclohexene dioxide, which contains two epoxide groups and one of which is part of the ring structure, 3,4-epoxy-6-methyl cyclohexyl methyl-3,4-epoxycyclohexane carboxylate and dicyclopentadiene dioxide.

Glycidyl ether epoxides are preferred in the invention, either separately or in combination with the non-glycidyl ether epoxides. A preferred epoxy resin of this type is bisphenol A resin. Another preferred epoxy resin is bisphenol F type resin. These resins are generally prepared by the reaction of one mole of bisphenol F epoxy resin and two moles of epichlorohydrin. A further preferred type of epoxy resin is epoxy novolac resin. Epoxy novolac resin is commonly prepared by the reaction of phenolic resin and epichlorohydrin. A preferred epoxy novolac resin is poly(phenyl glycidyl ether)-co-formaldehyde. Biphenyl type epoxy resin may also be utilized in the present invention. This type of resin is commonly prepared by the reaction of biphenyl resin and epichlorohydrin. Dicyclopentadiene-phenol epoxy resin, naphthalene resins, epoxy functional butadiene acrylonitrile copolymers, epoxy functional polydimethyl siloxane and mixtures thereof are additional types of epoxy resins which may be employed. Commercially available bisphenol-F type resins are available from CVC Specialty Chemicals, Maple Shade, New Jersey, under the designation 8230E and Resolution Performance Products LLC under the designation RSL1739. Bisphenol-A type resin is commercially available from Resolution Technology as EPON 828, EPON 1001, EPON 1002 and a blend of bisphenol-A and bisphenol-F is available from Nippon Chemical Company under the designation ZX-1059. The resin commercially available from Vantico as XP71756.00 may also be utilized.

To enable the solution based approach towards creating a b-stageable adhesive, the solid epoxy blend is dissolved in a solvent before it is applied to the substrate. Preferably, the solvent will evaporate during the B-stage process. Common solvents that readily dissolve the epoxy resins, non-reactive, and with the proper boiling point ranging from about 70 °C to 170 °C can be used for this application. Examples of solvents that may be utilized include ketones, esters, acetates, alcohols, ethers, and other common solvents that are stable and dissolve the epoxy and phenolic resins in the composition. Preferred solvents include γ-butyrolactone and propylene glycol methyl ethyl acetate (PGMEA).

One or more latent hardeners are included in the adhesive composition. Preferred latent hardeners are generally solid and include imidazoles. Imidazoles that may be utilized include, but are not limited to, non-N-substituted imidazoles such as 2-phenyl-4-methyl imidazole, 2-ethyl-4-methyl-imidazole, 2-phenyl imidazole and imidazole. Other useful imidazole components include alkyl-substituted imidazole, N-substituted imidazole and mixtures thereof. In addition, encapsulated imidazoles and other encapsulated hardeners may be utilized. An acceptable latent hardener is NOVACURE, commercially available from Asahi Kasei.

Although the viscosity of the system can be adjusted with solvent for solution based B-stageable paste, viscosity can also be adjusted with diluents for B-stageable, solution type and chemical advancement type, adhesives. Exemplary reactive diluents are glycidyl ethers, for example, 1,4-butanediol diglycidyl ether; vinyl ethers, for example, ethylene vinyl ether, and vinyl esters, for example, ethylene vinyl ester, and acrylates, for example, methyl methacrylate, p-tert-butyl-phenyl glycidyl ether, allyl glycidyl ether, glycerol diblycidyl ether, glycidyl ether of alkyl phenol (commercially available from Cardolite Corporation as Cardolite NC513), and Butanediodiglycidylether (commercially available as BDGE from Aldrich), although other diluents may be utilized.

The adhesive may comprises one or more thixotropic agents. Various thixotropic agents may be utilized, including but not limited to silica, fumed silica, mineral fillers, ceramic filler, metal filler, and other common thixotropes known to those skilled in the art. In addition, surfactants, coupling agents, air release agents, flow additives, adhesion promoters, and other ingredients may also be added as desired. If desired, conductive fillers may also be added to reduce the volume resistivity of the adhesive. Exemplary conductive fillers include, but are not limited to, silver, copper, gold, palladium, platinum, nickel, gold or silver-coated nickel, carbon black, carbon fiber, graphite, aluminum, indium tin oxide, silver coated copper, silver coated aluminum, metallic coated glass spheres, metallic coated filler, metallic coated polymers, silver coated fiber, silver coated spheres, antimony doped tin oxide, conductive nanospheres, nano silver, nano aluminum, nano copper, nano nickel, carbon nanotubes and mixtures thereof. Further, non-conductive fillers may be added as desired to reduce the coefficient of thermal expansion of the adhesive. Exemplary non-conductive fillers include silica, alumina, clay and mixtures thereof.

The adhesive composition of the invention contains from about 50 weight percent to about 90 weight percent of epoxy; from about 30 weight percent to about 50 weight percent of a solvent; from about 1 to about 10 weight percent of a thixotropic agent; and from about 2 to about 20 weight percent of a latent hardener; for a total of 100 weight percent. Preferably the adhesive composition comprises from about 65 weight percent to about 85 weight percent of epoxy; from about 35 weight percent to about 45 weight percent of a solvent; from about .2 to about 10 weight percent of a thixotropic agent; and from about 5 to about 15 weight percent of a latent hardener.

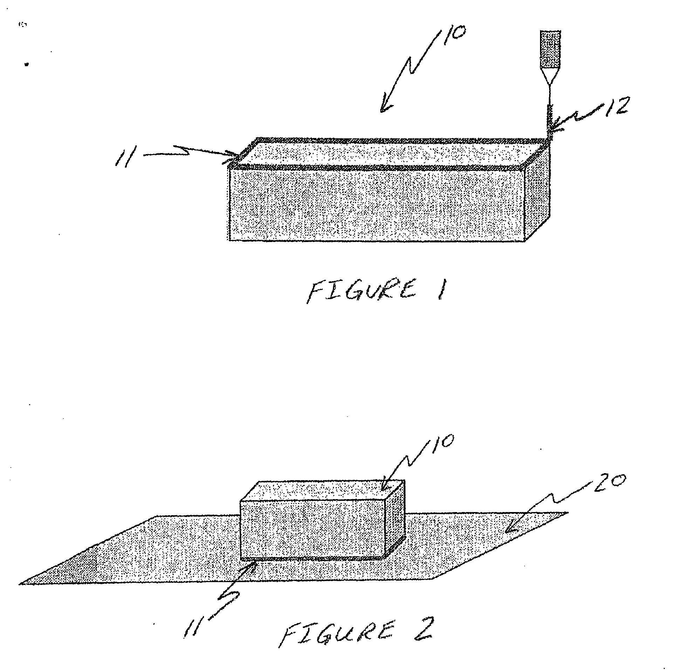

The adhesive of the present invention may be utilized for any desired application, particular applications involving assembly of electronic components. A preferred application is the attachment of lids to substrates. Package lids are utilized to cover and protect fragile, sensitive electronic components that are affixed to a substrate. As shown in Figure 1, package lids 10 have a rim 11 that surrounds the perimeter of the lid opening. The adhesive of the present invention may be applied to all or a portion of the rim in a viscous liquid or tack free B-stageable form. During assembly of the electronic component, as shown in Figure 2, the lid 10 is placed on the substrate 20 in the desired position such that the rim 11 is in direct contact with the substrate. Heat, UV light and/or pressure is applied to the unit such that the adhesive cures to form a hermetically sealed package which protects the electronic components contained within. In the case that the adhesive is applied as a B-stageable adhesive, the package lid may be shipped or stored before assembly takes place. The adhesive of the present invention is non-conductive and provides the benefits of chemical resistance, flexibility and good adhesion to a variety of surfaces, including liquid crystal polymers.

Many modifications and variations of this invention can be made without departing from its spirit and scope, as will be apparent to those skilled in the art. The specific embodiments described herein are offered by way of example only, and the invention is to be limited only by the terms of the appended claims, along with the full scope of equivalents to which such claims are entitled.

## Claims

1. An adhesive for use in electronic components comprising one or more solid epoxies, one or more latent hardeners, one or more thixotropic agents, and one or more solvents.

2. The adhesive of claim 1, wherein at least one of the one or more solid epoxies is a flexibilized epoxy.

3. The adhesive of claim 1, wherein the one or more solid epoxies are selected from the group consisting of epoxy functional butadiene, epoxy functional silicone, epoxy functional acrylic rubber, epoxy functional nitrile rubber, epoxy-CTBN adducts, epoxy-urethane adducts and mixtures thereof.

4. The adhesive of claim 1, wherein the one or more latent hardeners comprise one or more imidazoles.

5. The adhesive of claim 1, wherein one or more of the latent hardeners is microencapsulated.

6. The adhesive of claim 4, wherein the one or more imidazoles are selected from the group consisting of non-N-substituted imidazoles, 2-phenyl-4-methyl imidazole, 2-ethyl-4-methyl-imidazole, 2-phenyl imidazole, alkyl-substituted imidazole, N-substituted imidazole and mixtures thereof.

7. The adhesive of claim 1, wherein the one or more solvents are selected from the group consisting of ketones, esters, alcohols, ethers, γ-butyrolactone, acetates, propylene glycol methyl ethyl acetate and mixtures thereof.

8. The adhesive of claim 1, wherein the one or more thixotropic agents are selected from the group consisting of inorganic fillers, metal fillers, organic thixotropes and mixtures thereof.

9. The adhesive of claim 1, further comprising a liquid epoxy component.

10. The adhesive of claim 1, further comprising one or more of the group consisting of diluents, surfactants, coupling agents, air release agents, flow additives, adhesion promoters and mixtures thereof.

11. The adhesive of claim 1, wherein the adhesive is capable of application to a component as a B-stageable, tack free composition.

12. The adhesive of claim 1, wherein the adhesive comprises from about 50 to about 90 weight percent epoxy.

13. The adhesive of claim 1, wherein the adhesive comprises from about 30 to about 50 weight percent solvent.

14. The adhesive of claim 1, wherein the adhesive comprises from about 2 to about 20 weight percent latent hardener.

15. The adhesive of claim 1, wherein the adhesive comprises from about 0.1 to about 10 weight percent thixotropic agent.

16. The adhesive of claim 1, wherein the adhesive cures in less than about ten minutes at temperatures in the range of about 170°C.

17. The adhesive of claim 1, wherein the adhesive cures in less than about five minutes at temperatures in the range of about 180°C.

18. The adhesive of claim 11, wherein the adhesive has a shelf life of greater than two months at 25°C after it is applied to the component.

19. The adhesive of claim 1, wherein the adhesive adheres to liquid crystal polymer surfaces.

20. The adhesive of claim 1, wherein the adhesive further comprises one or more conductive fillers.

21. The adhesive of claim 1, wherein the adhesive further comprises one or more non-conductive fillers.

22. A method of sealing a lid to a substrate in an electronic assembly comprising the steps of applying the adhesive of claim 1 to the lid and contacting the lid with the substrate.

23. The method of claim 22 comprising the further step of applying heat and/or pressure to the lid and substrate.

24. A method of sealing a lid to a liquid crystal polymer substrate in an electronic assembly comprising the steps of applying the adhesive of claim 1 to the lid and contacting the lid with the substrate.

25. The method of claim 24 comprising the further step of applying heat and/or pressure to the lid and substrate.

26. An electronic device having the adhesive of claim 1.
